# EUROPÄISCHE PATENTSCHRIFT

(11) **EP 0 922 523 B1**
(45) Veröffentlichungstag und Bekanntmachung des Hinweises auf die Patenterteilung: **16.05.2001**
(21) Anmeldenummer: 98120865.5
(22) Anmeldetag: 03.11.1998
(51) Int. Cl.: B23K 11/11, B23K 11/30

(54) **Punktschweisswerkzeug mit einer Wickelvorrichtung**
Spot welding tool with reeling device
Outil de soudage par points avec dispositif d'enroulement

(30) Priorität: 09.12.1997 DE 19754546
(43) Veröffentlichungstag der Anmeldung: 16.06.1999
(73) Patentinhaber: Bayerische Motoren Werke Aktiengesellschaft, 80788 München (DE)
(72) Erfinder: Müller, Dietmar, 92521 Schwarzenfeld (DE); Schubert, Franz, 85586 Poing (DE); Donath, Norbert, 82343 Pöcking (DE); Gschossmann, Nikolaus, 83236 Übersee (DE)

(56) Entgegenhaltungen:
- DE-A- 4 416 504

## Beschreibung

Die Erfindung betrifft ein Punktschweißwerkzeug mit einer Wickelvorrichtung zum Auf- und Abwickeln von Folienband, das quer an der Elektrodenspitze der Punktschweißelektrode anliegt.

Ein beim Punktschweißen häufig auftretendes Problem ist das Anlegieren von Blechmaterial an den Punktschweißelektroden. Dieses Anlegieren kann dazu führen, daß eine schlechte Schweißverbindung entsteht, die Elektrode an dem Blech haften bleibt oder die Blechoberfläche zerstört wird.

Zur Lösung des oben genannten Problems offenbart die DE 44 16 504 A1 eine Elektrode, deren Spitze mit einem Folienband abgedeckt ist. Das Folienband weist eine gute elektrische und thermische Leitfähigkeit auf und besteht aus einem Material, das nicht zum Anlegieren neigt, wodurch das Anlegieren fast vollständig vermieden werden kann. Ferner erstreckt sich das Folienband von einer Abwickelspule über die Elektrodenspitze zu einer Aufwickelspule hin, wobei die beiden Spulen z.B. an den Pinolen einer Widerstands-Punktschweißzange angeordnet sind, und das Folienband an der Elektrodenspitze quer anliegt. Damit Verschleißerscheinungen durch Dauerbeanspruchung des Folienbands nicht zu einer Einschränkung des Schutzes der Elektrode führen, kann jede Spule mittels einer Antriebsvorrichtung zwischen zwei aufeinanderfolgenden Schweißvorgängen schrittweise angetrieben werden, wodurch das Folienband einen bestimmten Weg weiterbefördert wird und daher ein ungebrauchter Folienbandabschnitt auf die Elektrodenspitze gebracht wird.

Die oben beschriebene Wickelvorrichtung zum Auf- und Abwickeln von Folienband nimmt jedoch relativ viel Platz ein, so daß die zu verschweißenden Bauteile bezüglich des mit einer bekannten Wicklvorrichtung versehenen Punktschweißwerkzeuges oftmals viele Störkanten besitzen, die in aufwendiger Weise beispielsweise von einem das Punktschweißwerkzeug tragenden Roboter umfahren werden müssen. Ferner sind die Bandspulen relativ weit von der Elektrodenspitze entfernt angeordnet, wodurch ein relativ langer Bandabschnitt am Anfang und am Ende jedes Folienbandes ungenutzt bleibt.

Durch die Erfindung wird ein Punktschweißwerkzeug mit einer Wickelvorrichtung zum Auf- und Abwickeln von Folienband geschaffen, wobei die Wickelvorrichtung einen kompakten Aufbau aufweist, so daß die bereits erwähnte Zahl von Störkanten gering bleibt, und wobei wenig Folien-Band aufgrund der Folienbandführung unnutzbar bleibt.

Dies wird erfindungsgemäß erreicht durch ein Punktschweißwerkzeug mit einer Wikkelvorrichtung der eingangs erwähnten Art, bei welchem die Wickelvorrichtung mit einer ringförmigen Abwickelspule zum Abwickeln des Folienbands, einer ringförmigen Aufwickelspule zum Aufwickeln des Folienbands, und einer ringförmigen Antriebsvorrichtung zum getakteten Drehen der Aufwickelspule versehen ist. Die Abwickelspule, die Aufwickelspule und die Antriebsvorrichtung sind koaxial zueinander nebeneinander rings des Elektrodenschafts der Punktschweißelektrode angeordnet. Schräg zu dem Elektrodenschaft und im radialen Abstand von der Abwickelspule ist eine erste Schränkrolle angeordnet, mittels der das Folienband von der Abwickelspule zur Elektrodenspitze hin umlenkbar und querstellbar ist. Ferner ist schräg zum Elektrodenschaft und im radialen Abstand von der Aufwickelspule eine zweite Schränkrolle angeordnet, mittels der das Folienband von der Elektrodenspitze zu der Aufwickelspule hin umlenkbar und querstellbar ist, wobei die beiden Schränkrollen an einander gegenüberliegenden Seiten des Elektrodenschafts angeordnet sind.

Die erfindungsgemäße Wickelvorrichtung ist kompakt und platzsparend aufgebaut, da sie eine im wesentlichen zylinderförmige Einheit bildet, die rings des Elektrodenschafts der Punktschweißelektrode angeordnet ist.

Ferner hat das Anordnen der Wickelvorrichtung rings des Elektrodenschafts einen relativ kurzen Weg für das Folienband von der Abwickelspule zu der Elektrodenspitze und von der Elektrodenspitze zu der Aufwickelspule zur Folge, wodurch wenig Folienband unnutzbar ist, und somit die Bandausbeute erhöht ist. Auch wirkt sich der kurze Weg positiv auf die Stabilität des Bandverlaufs aus, da das Folienband relativ schwer verdrehbar ist und relativ abrutschsicher an der Elektrodenspitze anliegt.

Beispielsweise zwischen zwei aufeinanderfolgenden Schweißvorgängen wird wenigstens die Aufwickelspule um ihre Symmetrieachse um einen bestimmten Winkel von der Antriebsvorrichtung gedreht. Dadurch wird ein Teil des Folienbands auf die Aufwickelspule aufgewickelt und das Folienband einen bestimmten Weg weiterbefördert, wodurch sichergestellt ist, daß vor jedem Schweißvorgang ein ungebrauchter Abschnitt des Folienbandes an der Elektrodenspitze zu deren Schutz anliegen kann.

Die maximale Länge des auf eine der beiden Spulen aufwickelbaren Folienbands ist sowohl von den geometrischen Abmessungen der jeweiligen Spule als auch von der Folienbanddicke abhängig. Nach einer Ausführungsform der erfindungsgemäßen Wickelvorrichtung ist jede Spule derart ausgelegt, daß ca. 15 m des verwendeten Folienbands aufwickelbar sind.

Der kompakte Aufbau der Wickelvorrichtung ermöglicht es, die Elemente derselben zu einer Einheit zusammenzusetzen, so daß nach einer Ausführungsform die Abwikkelspule, die Aufwickelspule und die Antriebsvorrichtung mitsamt den Schränkrollen als Baueinheit zusammengebaut sind. Ferner wird dadurch das Lagern und die Handhabung der erfindungsgemäßen Wickelvorrichtung deutlich erleichtert.

Das Aufwickeln von neuem Folienband auf die Abwickelspule und das Abwickeln von gebrauchtem Folienband von der Aufwickelspule sind zeitaufwendig und können zu einer unerwünscht langen Unterbrechung der Produktion führen. Deshalb sind die Abwickelspule und die Aufwickelspule bevorzugt in Form einer auswechselbaren Patroneneinheit ausgebildet, die von der Antriebsvorrichtung lösbar ist. Eine solche Patroneneinheit kann schnell gegen eine neue Patroneneinheit mit neuem Folien-band ausgetauscht werden, so daß die Ausfallzeit für die Produktion gering ist. Die ausgewechselte Patrone kann dann separat wiederaufbereitet werden, indem das alte Folienband von der Aufwickelspule abgewickelt und neues Folienband auf die Abwickelspule aufgewickelt wird.

Die erfindungsgemäße Wickelvorrichtung kann z.B. von einer separaten Halterung gehalten werden. Eine solche Halterung erhöht jedoch den Platzbedarf des Punktschweißwerkzeugs, so daß die erfindungsgemäße Wickelvorrichtung bevorzugt, z.B. über die Antriebsvorrichtung, an dem Elektrodenschaft befestigt ist.

Mit der Zeit verschleißen die Elektroden, so daß diese ausgetauscht werden müssen. Da die Lebensdauer der erfindungsgemäßen Wickelvorrichtung die Lebensdauer einer herkömmlichen Elektrode übersteigen kann, ist nach einer Ausführungsform die Wickelvorrichtung an dem Elektrodenschaft der Punktschweißelektrode lösbar befestigt, so daß die Wickelvorrichtung an einer anderen Elektrode befestigt werden kann.

Eine besonders einfach zu realisierende und leicht zu bedienende Befestigungsvorrichtung, mit der die Wickelvorrichtung an der Elektrode lösbar befestigt werden kann, ist ein Bajonettverschluß, so daß nach einer Ausführungsform die erfindungsgemäße Wickelvorrichtung, z.B. an der Antriebsvorrichtung, einen Bajonettverschluß aufweist, und der Elektrodenschaft der Punktschweißelektrode derart ausgebildet ist, daß die Wickelvorrichtung mittels des Bajonettverschlusses an dem Elektrodenschaft der Punktschweißelektrode befestigt werden kann.

Die Antriebsvorrichtung der erfindungsgemäßen Wickelvorrichtung kann zum getakteten Drehen der Aufwickelspule elektrisch, mechanisch oder pneumatisch angetrieben werden. Nach einer Ausführungsform weist die Antriebsvorrichtung eine Antriebswelle zum getakteten Drehen der Aufwickelspule auf, wobei die Antriebswelle von der Antriebsvorrichtung gedreht wird. Die Antriebsvorrichtung wird dabei pneumatisch angetrieben, wobei die Pneumatikversorgung über das Schweißgerät erfolgen kann.

Damit das Folienband im Betrieb, bei stärkeren Schwingungen oder bei Erschütterungen nicht verrutscht, kann die Elektrode an einander gegenüberliegenden Seitenflächen Aussparungen oder Aufnahme-Elemente aufweisen, in denen das Folien-band geführt wird. Die Fertigung solcher Elektroden ist jedoch aufwendig und teuer, so daß nach einer bevorzugten Ausführungsform die erfindungsgemäße Wickelvorrichtung zwei Bandführungen zum Führen des Folienbands aufweist, die jeweils auf einander gegenüberliegenden Seiten des Elektrodenschafts und im radialen Abstand von demselben zwischen den Schränkrollen und der Elektrodenspitze angeordnet sind. Ferner können die Bandführungen Teil der oben beschriebenen Baueinheit sein.

Die Erfindung wird anhand einer bevorzugten Ausführungsform unter Bezugnahme auf die Zeichnung näher erläutert. In der Zeichnung zeigen
- Figur 1: eine Prinzipskizze einer Ausführungsform der erfindungsgemäßen Wickelvorrichtung (ohne Antriebsvorrichtung und Bandführungen),
- Figur 2: eine perspektivische Ansicht der Ausführungsform nach Figur 1 im auseinandergebauten Zustand (ohne Band und Bandführungen),
- Figur 3: eine perspektivische Ansicht der Ausführungsform nach Figur 1 im zusammengebauten Zustand (ohne Band und Bandführungen),
- Figur 4: eine perspektivische Ansicht der Patroneneinheit der Ausführungsform nach Figur 1 im zusammengebauten Zustand (ohne Band und Bandführungen),
- Figur 5: eine Teilansicht eines Punktschweißwerkzeugs mit der Wickelvorrichtung gemäß der Ausführungsform nach Figur 1,
- Figur 6: eine Ansicht eines geringfügig anders gestalteten erfindungsgemäßen Punktschweißwerkzeuges.

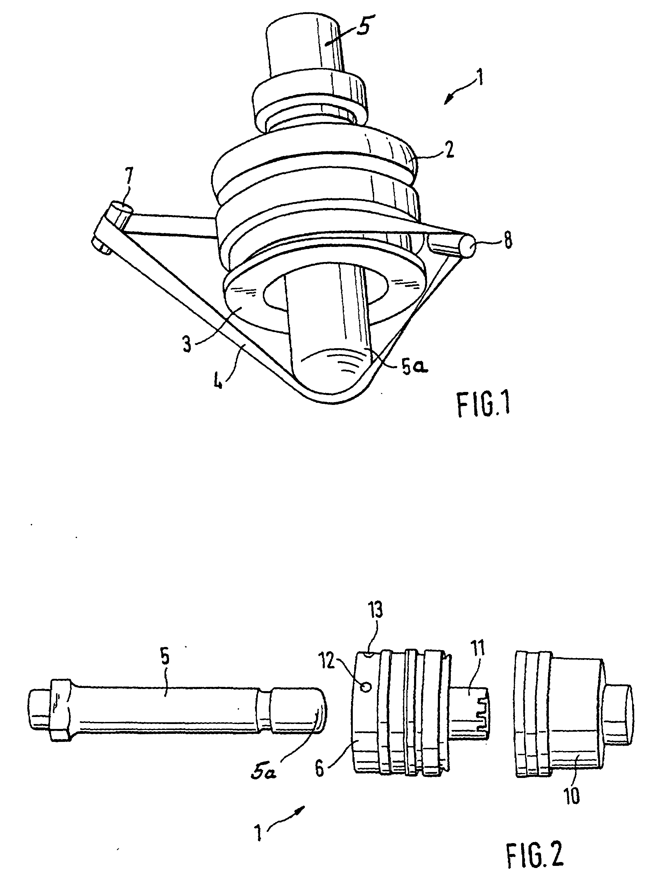

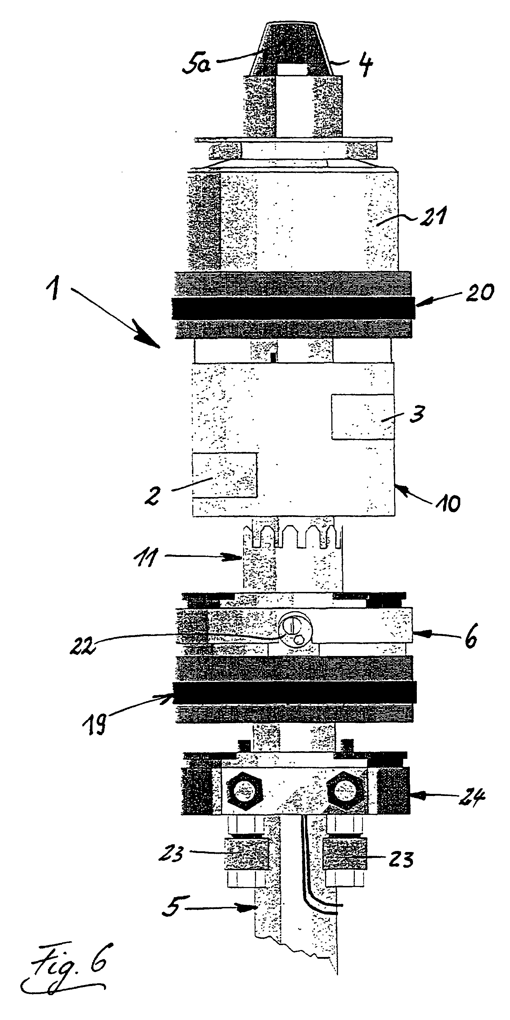

Aus Figur 1 ist eine Prinzipansicht einer Ausführungsform der erfindungsgemäßen Wickelvorrichtung 1 ersichtlich. Eine drehbar gelagerte ringförmige Abwickelspule 2 zum Abwickeln von Folienband 4 ist neben einer drehbar gelagerten ringförmigen Aufwickelspule 3 zum Aufwickeln von Folienband 4 angeordnet. Beide Spulen 2, 3 und eine ringförmige Antriebsvorrichtung 6 (vgl. Fig. 2, 6) zum getakteten Drehen der Aufwickelspule 3 sind koaxial zueinander rings des Elektrodenschafts 5 einer Punktschweißelektrode angeordnet, wobei die Antriebsvorrichtung 6 am Elektrodenschaft 5 lösbar befestigt ist.

Eine erste Schränkrolle 7 ist schräg zu dem Elektrodenschaft 5 und im radialen Abstand von der Abwickelspule 2 angeordnet, wobei das Folienband 4 mittels der ersten Schränkrolle 7 zu der Elektrodenspitze 5a des Elektrodenschaftes 5 hin umlenkbar und querstellbar ist. Ferner ist eine zweite Schränkrolle 8 schräg zu dem Elektrodenschaft 5 und im radialen Abstand von der Aufwickelspule 3 angeordnet, wobei das Folienband 4 mittels der zweiten Schränkrolle 8 von der Elektrodenspitze 5a zu der Aufwickelspule 3 hin umlenkbar und querstellbar ist.

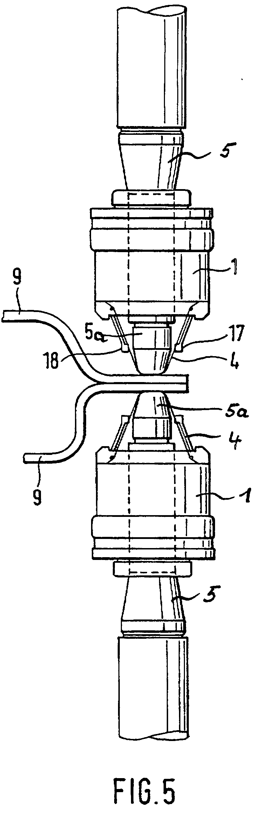

Wie aus Figur 1 ersichtlich, sind die beiden Schränkrollen 7, 8 jeweils auf einander gegenüberliegenden Seiten des Elektrodenschafts 5 angeordnet. Das quer an der Elektrodenspitze 5a anliegende Folienband 4 befindet sich während des Schweißvorgangs zwischen dem zu verschweißenden Werkstück 9 (siehe Figur 5) und der Elektrodenspitze 5a, so daß die Elektrodenspitze 5a vor Beschädigungen und insbesondere vor Anlegierungserscheinungen beim Schweißprozeß, in welchem die beiden Werkstücke 9 wie bekannt mittels zweier erfindungsgemäßer Punktschweißwerkzeuge miteinander verschweißt werden, geschützt ist. (Hierzu wird nochmals auf die eingang bereits genannte DE 44 16 504 A1 verwiesen). Selbstverständlich können - wie Figur 5 zeigt - die beiden Punktschweißelektroden bzw. deren Elektrodenspitzen 5a, die zum Verschweißen zweier Werkstücke 9 miteinander benötigt werden, jeweils mit einem Folienband 4 sowie einer erfindungsgemäßen Wickelvorrichtung 1 versehen sein.

Beispielsweise zwischen zwei aufeinanderfolgenden Schweißvorgängen wird die Aufwickelspule 3 zum Aufwickeln des Folienbands 4 von der Antriebsvorrichtung 6 taktweise gedreht, so daß zu Beginn des nächsten Schweißvorgangs ein ungebrauchter Abschnitt des Folienbandes 4 zwischen der Elektrodenspitze 5a und dem zugeordneten Werkstück 9 liegt.

Die Abwickelspule 2 kann grundsätzlich frei drehbar sein, so daß sich beim getakteten Drehen der Aufwickelspule 3 der für die Abwickelspule 2 erforderliche Verdrehwinkel zum Abwickeln eines gewissen Folienbandabschnitts ausreichender Länge automatisch einstellt. Dabei ist die Abwickelspule 2 derart gelagert, daß sie der Drehbewegung einen ausreichend hohen Widerstand entgegensetzt, wodurch ein unbeabsichtigtes Abwickeln von Folienband 4 aufgrund betriebsbedingter Erschütterungen oder Schwingungen nicht erfolgen kann. Die Höhe dieses Widerstands, der mittels einer nicht gezeigten pneumatischen Bremse erzeugt werden kann, ist dabei durch die Reißfestigkeit des Folienbandes 4 und durch die Leistungsfähigkeit der Antriebsvorrichtung 6 nach oben hin begrenzt.

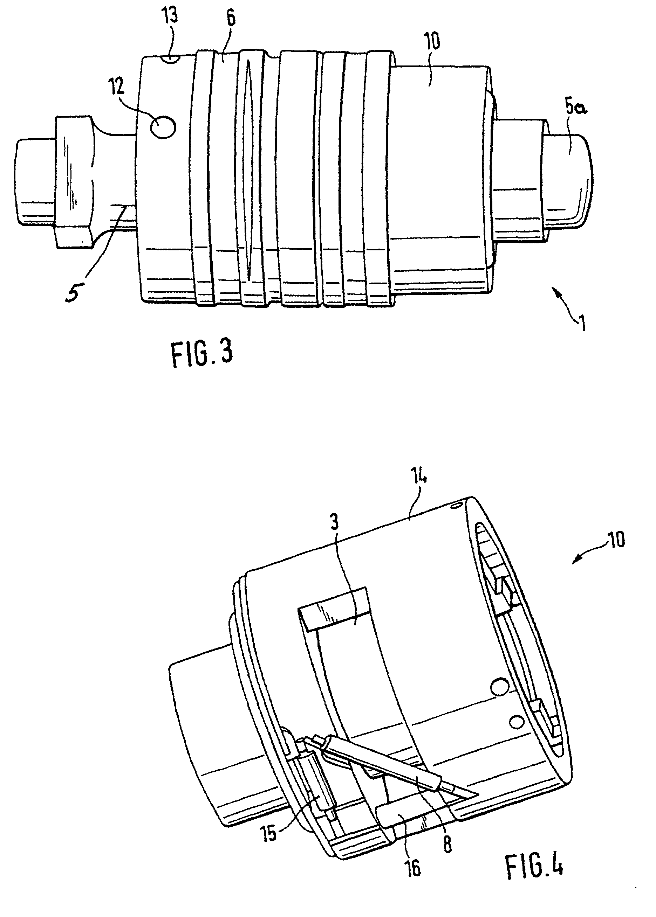

Aus Figur 2 ist eine perspektivische Ansicht der Ausführungsform nach Figur 1 in einem zum Teil auseinandergebauten Zustand ohne Folienband 4 ersichtlich. Die beiden Spulen 2, 3 sind in einer Patroneneinheit 10 angeordnet bzw. zu einer solchen zusammengefasst, welche zum Auswechseln von Folienband 4 von der Antriebsvorrichtung 6 und von dem Elektrodenschaft 5 lösbar ist. Ferner sind die Schränkrollen 7, 8 in bzw. an der Patroneneinheit 10 angeordnet, hier jedoch nicht ersichtlich. Denn aus Bauraumgründen sind die beiden Schränkrollen 7, 8 selbstverständlich nicht so weit in radialer Richtung vom Elektrodenschaft 5 beabstandet, wie in Fig. 1 (lediglich der Übersichtlichkeit halber) dargestellt. Vielmehr befinden sie sich nahe der Spulen (Abwickelspule 2 und Aufwickelspule 3) innerhalb der hier nicht näher dargestellten Patroneneinheit 10. In diesem Zusammenhang wird bereits kurz auf Fig. 4 verwiesen, worin diese Patroneneinheit 10 detaillierter dargestellt ist. Darin erkennt man die Anordnung der zweiten Schränkrolle 8 nahe der zugeordneten Aufwickelspule 3; die erste Schränkrolle 7 befindet sich dabei in dieser Darstellung nach Fig. 4 auf der Rückseite der Patroneneinheit 10.

Wenn das Folienband 4 aufgebraucht ist, kann die an der Antriebsvorrichtung 6 befestigte Patroneneinheit 10 durch eine neue Patroneneinheit 10 mit ungebrauchtem Folienband 4 ersetzt werden. Da ein Patronenwechsel erheblich schneller erfolgen kann, als ein gesondertes Ersetzen beider Spulen und das Einfädeln des neuen Folienbandes 4 in die Aufwickelspule 3, wird durch das Verwenden von auswechselbaren Patroneneinheiten 10 die Ausfallzeit einer Schweißelektrode beim Folienbandwechsel herabgesetzt. Die Patroneneinheiten 10 können dann separat entsorgt oder zur erneuten Verwendung aufbereitet werden.

Die Antriebsvorrichtung 6 weist zum Drehen der Aufwickelspule 3 eine Antriebswelle 11 auf, wobei gemäß der gezeigten Ausführungsform die Antriebsvorrichtung 6 zum Drehen der Antriebswelle 11 pneumatisch angetrieben wird und einen dafür erforderlichen Luftanschluß 12 aufweist (vgl. Fig. 2). Ferner wird der Verdrehwinkel der Antriebswelle 11 mit einer in der Antriebsvorrichtung 6 angeordneten Überwachungseinrichtung, z.B. mit einem Lichttaster, gemessen, so daß gemäß der gezeigten Ausführungsform die Antriebsvorrichtung 6 einen entsprechenden Anschluß 13 für die Überwachungseinrichtung aufweist.

Die Wickelvorrichtung 1 kann gemäß der gezeigten Ausführungsform von dem Elektrodenschaft 5 gelöst werden. Damit dies schnell und einfach erfolgen kann, weist die Antriebsvorrichtung 6 einen Bajonettverschluß 19 auf (vgl. Fig. 6) und der Elektrodenschaft 5 ist derart ausgebildet, daß die Antriebsvorrichtung 6 mittels des Bajonettverschlusses 19 an dem Elektrodenschaft 5 lösbar befestigt werden kann. In gleicher Weise ist eine ebenfalls als Bajonettverschluß 20 ausgebildete lösbare Verbindung zwischen der Patroneneinheit 10 sowie dem Spitzenbereich der Punktschweißelektrode bzw. deren Elektrodenspitze 5a vorgesehen. Hierauf wird an späterer Stelle i.V.m. Fig. 6 noch kurz eingegangen.

Aus Figur 3 ist eine perspektivische Ansicht der Ausführungsform nach Figur 1 im zusammengebauten Zustand ohne Folienband 4 ersichtlich, wobei die Patroneneinheit 10 - wie bereits erläutert mit der innerhalb derselben angeordneten, hier jedoch nicht nicht sichtbaren Abwickelspule 2, der Aufwickelspule 3 und den Schränkrollen 7, 8, - sowie die Antriebsvorrichtung 6 zu einer Baueinheit zusammengefasst sind, welche auf den Elektrodenschaft 5 aufgesteckt ist, und zwar über den bereits erwähnten, lediglich in Fig. 6 dargestellten Bajonettverschluß 19.

Aus Figur 4 ist eine perspektivische Ansicht der wiederbefüllbaren Patroneneinheit 10 gemäß der beschriebenen Ausführungsform ersichtlich. Die Abwickelspule 2 und die Aufwickelspule 3 sind in einem Gehäuse 14 der Patroneneinheit 10 angeordnet. Die erste Schränkrolle 7 und die zweite Schränkrolle 8 sind an dem Gehäuse 14 drehbar gelagert angeordnet (die erste Schränkrolle 7 befindet sich bei dieser Darstellung nach Fig. 4 analog der Prinzipdarstellung nach Fig. 1 auf der Rückseite der Patroneneinheit 10), wobei weitere Bandführungsrollen 15, 16 zum Führen des Folienbandes 4 direkt an dem Gehäuse 14 angeordnet sind bzw. sein können.

Aus Figur 5 ist eine Teilansicht eines kompletten Punktschweißwerkzeugs mit der Wickelvorrichtung 1 gemäß der Ausführungsform ersichtlich. Ein derartiges komplettes Punktschweißwerkzeug besteht selbstverständlich aus zwei Elektrodenspitzen 5a mit den zugeordneten Elektrodenschäften 5, um die beiden Werkstücke 9 miteinander verschweißen zu können. Jeder der beiden Elektrodenspitzen 5a ist ein eigenes Folienband sowie jeweils eine erfindungsgemäße Wickelvorrichtung 1 zugeordnet.

Wie ersichtlich weist jede Wickelvorrichtung 1 zwei Bandführungen 17, 18 auf, von denen das Folienband 4 zwischen der ersten Schränkrolle 7 und der Elektrodenspitze 5a sowie zwischen der Elektrodenspitze 5a und der zweiten Schränkrolle 8 sicher geführt wird. Diese sichere Führung verhindert ein Abrutschen des Folienbands 4 von der Elektrodenspitze 5a bei betriebsbedingten Schwingungen oder Erschütterungen des Punktschweißwerkzeugs. Die Bandführungen 17, 18 sind dabei jeweils an einander gegenüberliegenden Seiten des Elektrodenschafts 5 zwischen den Schränkrollen 7, 8 und der Elektrodenspitze 5a angeordnet.

Figur 6 schließlich zeigt nochmals eine geringfügig andere Darstellung eines erfindungsgemäßen Punktschweißwerkzeuges, wobei gleiche Bauelemente mit gleichen Bezugsziffern bezeichnet sind. So erkennt man die Patroneneinheit 10 mit der symbolisch dargestellten Abwickelspule 2 und Aufwickelspule 3. Über einen Bajonettverschluß 20 ist diese Patroneneinheit 10, die auf dem Elektrodenschaft 5 angeordent ist, lösbar mit der vom Elektrodenschaft 5 trennbaren und somit auswechselbaren Elektrodenspitze 5a verbunden. Über letztere ist das besagte Folienband 4, von der Abwickelspule 2 kommend zur Aufwickelspule 3 hin geführt. Zum Schutz desselben ist hier noch eine das Folienband 4 auf seinem Weg abdeckende Schutzhülse 21 vorgesehen.

Auf der dem Bajonettverschluß 20 abgewandten Seite der Patronenhülse 10 erkennt man die Antriebswelle 11 sowie die sich daran anschließende Antriebsvorrichtung 6, die über einen Justierexzenter 22 einstellbar ist. An die Antriebsvorrichtung 6 schließt sich der bereits erläuterte Bajonettverschluß 19 an, über welchen die gesamte Baueinheit vom Elektrodenschaft 5 trennbar und abnehmbar ist. Letzterer trägt noch eine Druckluftanschlüsse 23 (u.a. für die Antriebsvorrichtung 6, d.h. für den Antrieb der Aufwickelspule 3 sowie für die pneumatische Bremse der Abwickelspule 2) aufweisende Elektrodenklemmeinheit 24, jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen.

### Bezugszeichenliste:

- 1: Wickelvorrichtung
- 2: Abwickelspule
- 3: Aufwickelspule
- 4: Folienband
- 5: Elektrodenschaft
- 5a: Elektrodenspitze von 5
- 6: Antriebsvorrichtung
- 7: erste Schränkrolle
- 8: zweite Schränkrolle
- 9: Werkstück(e)
- 10: Patroneneinheit
- 11: Antriebswelle
- 12: Luftanschluß
- 13: Anschluß für Überwachungseinrichtung
- 14: Gehäuse von 10
- 15,16: Bandführungsrollen
- 17,18: Bandführungen
- 19: Bajonettverschluß
- 20: Bajonettverschluß
- 21: Schutzhülse
- 22: Justierexzenter
- 23: Druckluftanschlüsse
- 24: Elektrodenklemmeinheit

## Patentansprüche

1. Punktschweißwerkzeug mit einer Wickelvorrichtung (1) zum Auf- und Abwickeln von an der Elektrodenspitze (5a) der Punktschweißelektrode quer anliegendem Folienband (4), mit einer Abwickelspule (2) zum Abwickeln des Folienbands (4), mit einer Aufwickelspule (3) zum Aufwickeln des Folienbands (4), und mit einer Antriebsvorrichtung (6) zum getakteten Drehen der Aufwickelspule (3),
**dadurch gekennzeichnet,** daß die Abwickelspule (2), die Aufwickelspule (3) und die Antriebsvorrichtung (6) ringförmig ausgebildet sind und koaxial zueinander nebeneinander rings des Elektrodenschafts (5) der Punktschweißelektrode angeordnet sind, und daß schräg zu dem Elektrodenschaft (5) und im radialen Abstand von der Abwickelspule (2) eine erste Schränkrolle (7) angeordnet ist, mittels der das Folienband (4) von der Abwickelspule (2) zur Elektrodenspitze (5a) hin umlenkbar und querstellbar ist, und daß schräg zum Elektrodenschaft (5) und im radialen Abstand von der Aufwickelspule (3) eine zweite Schränkrolle (8) angeordnet ist, mittels der das Folienband (4) von der Elektrodenspitze (5a) zu der Aufwickelspule (3) hin umlenkbar und querstellbar ist, wobei die beiden Schränkrollen (7, 8) an einander gegenüberliegenden Seiten des Elektrodenschafts (5) angeordnet sind.

2. Punktschweißwerkzeug nach Anspruch 1, wobei die Abwickelspule (2) und die Aufwickelspule (3) in einer auswechselbaren Patroneneinheit (10) angeordnet sind, die von der Antriebsvorrichtung (6) lösbar ist.

3. Punktschweißwerkzeug nach Anspruch 1 oder 2, wobei die Wickelvorrichtung (1) mit der Antriebsvorrichtung (6) an dem Elektrodenschaft (5) lösbar befestigt ist.

4. Punktschweißwerkzeug nach Anspruch 3, wobei die Antriebsvorrichtung (6) zum schnellen Wechseln derselben einen Bajonettverschluß (19) aufweist, und der Elektrodenschaft (5) derart ausgebildet ist, daß die Antriebsvorrichtung (6) mittels des Bajonettverschlusses (19) an dem Elektrodenschaft (5) befestigbar ist.

5. Punktschweißwerkzeug nach einem der Ansprüche 1 bis 4, wobei die Antriebsvorrichtung (6) zum getakteten Drehen der Aufwickelspule (3) eine Antriebswelle (11) aufweist, welche von der Antriebsvorrichtung (6) pneumatisch antreibbar ist.

6. Punktschweißwerkzeug nach einem der Ansprüche 1 bis 5, wobei die Wickelvorrichtung (1) zwei Bandführungen (17, 18) zum Führen des Folienbands (4) aufweist, die jeweils auf einander gegenüberliegenden Seiten des Elektrodenschafts (5) und im radialen Abstand zu demselben zwischen den Schränkrollen (7, 8) und der Elektrodenspitze (5a) angeordnet sind.

7. Punktschweißwerkzeug nach einem der Ansprüche 1 bis 6, bei welcher die Abwickelspule (2), die Aufwickelspule (3) und die Antriebsvorrichtung (6) mitsamt den Schränkrollen (7, 8) und gegebenenfalls den Bandführungen (17, 18) als auswechselbare Baueinheit zusammengebaut sind.

## Claims

1. A spot welding tool with a winding device (1) for rolling on and off foil ribbon (4) from on the electrode tips (5a) of the spot welding electrodes on which it lies at right angles, with a supply spool (2) for winding off the foil ribbon (4), with a take-up spool (3) for winding on the foil ribbon (4) and with a drive unit (6) for the stepped turning of the take-up spool (3),
**characterised in that** the supply spool (2), the take-up spool (3) and the drive unit (6) are configured in ring shapes and arranged coaxially adjacent to each other around the electrode shaft (5) of the spot welding electrode, and that a first setting roller (7) is arranged at an angle to the electrode shaft (5) and at a radial separation from the supply spool (2) by means of which the foil ribbon (4) is guided and set at right angles from the supply spool (2) to the electrode tip (5a) and that a second setting roller (8) is arranged at an angle to the electrode shaft (5) and at a radial separation from the take-up spool (3) by means of which the foil ribbon (4) is guided and set at right angles from the electrode tip (5a) to the take-up spool (3) and the two setting rollers (7, 8) are arranged on opposite sides from each other of the electrode shaft (5).

2. A spot welding tool according to Claim 1, whereby the supply spool (2) and the take-up spool (3) are arranged in an exchangeable cartridge unit (10), which is removable from the drive unit (6).

3. A spot welding tool according to Claim 1 or Claim 2, whereby the winding device (1) is fastened removably on the electrode shaft (5) by the drive unit (6).

4. A spot welding tool according to Claim 3, whereby the drive unit (6) has a bayonet fastener (19) for its quick replacement and the electrode shaft (5) is constructed in such a manner that the drive unit (6) can be fastened to the electrode shaft (5) by means of the bayonet fastener (19).

5. A spot welding tool according to one of the Claims 1 to 4, whereby the drive unit (6) has a drive shaft (11) for the stepped turning of the take-up spool (3), which can be pneumatically driven by the drive unit (6).

6. A spot welding tool according to one of the Claims 1 to 5, whereby the winding device (1) has two ribbon guides (17, 18) to guide the foil ribbon (4), which are each arranged on opposite sides of the electrode shaft (5) and at a radial distance from it between the setting rollers (7, 8) and the electrode tip (5a).

7. A spot welding tool according to one of the Claims 1 to 6, in which the supply spool (2), the take-up spool (3) and the drive unit (6) including the setting rollers (7, 8) and possibly the ribbon guides (17, 18) are constructed together as an exchangeable component.

## Revendications

1. Outil de soudage par points comprenant un dispositif d'enroulement (1) servant à enrouler et à dérouler une bande mince (4) reposant en travers sur la pointe (5a) de l'électrode de soudage par points, une bobine débitrice (2) servant à dérouler la bande mince (4),une bobine réceptrice (3) servant à enrouler la bande mince (4), et un dispositif d'entraînement (6) servant à faire tourner en cadence la bobine réceptrice (3),
caractérisé en ce que
- la bobine débitrice (2), la bobine réceptrice (3) et le dispositif d'entraînement (6) sont constitués en forme d'anneaux et sont disposés de manière coaxiale les uns par rapport aux autres et les uns en arrière des autres autour de la tige (5) de l'électrode de soudage par points,
- un premier rouleau d'avoyage (7) est disposé de façon oblique par rapport à la tige (5) de l'électrode et à une certaine distance radiale de la bobine débitrice (2), rouleau au moyen duquel on peut faire tourner et mettre en travers la bande mince (4) à partir de la bobine débitrice (2) en direction de la pointe (5a) de l'électrode, et
- un deuxième rouleau d'avoyage (8) est disposé de manière oblique par rapport à la tige de l'électrode (5) et à une certaine distance radiale de la bobine réceptrice (3), deuxième rouleau au moyen duquel on peut faire tourner et mettre en travers la bande mince (4) depuis la pointe (5a) de l'électrode en direction de la bobine réceptrice (3), les deux rouleaux d'avoyage (7, 8) étant disposés sur des côtés opposés de la tige (5) de l'électrode.

2. Outil de soudage par points, selon la revendication 1,
caractérisé en ce que
la bobine débitrice(2) et la bobine réceptrice(3) sont disposées dans une unité de chargement (10) interchangeable, qui est amovible par rapport au dispositif d'entraînement (6)

3. Outil de soudage par points, selon la revendication 1 ou 2,
caractérisé en ce que
le dispositif d'enroulement (1) est fixé de manière amovible au dispositif d'entraînement (6) sur la tige (5) de l'électrode.

4. Outil de soudage par points, selon la revendication 3,
caractérisé en ce que
le dispositif d'entraînement (6) présente pour pouvoir le changer rapidement un emboîtement à baïonnette (19) et la tige de l'électrode (5) est constituée d'une manière telle que le dispositif d'entraînement (6) peut être fixé sur la tige (5) de l'électrode au moyen de l'emboîtement à baïonnette (19).

5. Outil de soudage par points, selon l'une des revendications 1 à 4,
caractérisé en ce que
le dispositif d'entraînement (6) présente pour faire tourner en cadence la bobine réceptrice (3) un arbre d'entraînement (11), qui peut être entraîné par le dispositif d'entraînement (6) de manière pneumatique.

6. Outil de soudage par points, selon l'une des revendications 1 à 5,
caractérisé en ce que
le dispositif d'enroulement (1) présente deux guides de bandes (17, 18) servant à guider la bande mince (4), et disposés respectivement sur des côtés opposés de la tige (5) de l'électrode et à une certaine distance radiale de celle-ci entre les rouleaux d'avoyage (7, 8) et la pointe (5a) de l'électrode.

7. Outil de soudage par points, selon l'une des revendications 1 à 6,
caractérisé en ce que
la bobine débitrice (2), la bobine réceptrice (3) et le dispositif d'entraînement (6) sont réunis en même temps que les rouleaux d'avoyage (7, 8) et le cas échéant les guides de bande (17, 18) en une unité de construction interchangeable.
